# EUROPÄISCHE PATENTSCHRIFT

(11) **EP 0 762 318 B1**
(45) Veröffentlichungstag und Bekanntmachung des Hinweises auf die Patenterteilung: **23.01.2002**
(21) Anmeldenummer: 96111288.5
(22) Anmeldetag: 12.07.1996
(51) Int. Cl.: G06K 11/18

(54) **Computermaus**
Computer mouse
Souris d'ordinateur

(30) Priorität: 23.08.1995 DE 19531066
(43) Veröffentlichungstag der Anmeldung: 12.03.1997
(73) Patentinhaber: Fujitsu Siemens Computers GmbH, 81739 München (DE)
(72) Erfinder: Esslinger, Hartmut, Prof.-Dr., Los Gatos, CA 95030 (US)
(74) Vertreter: Epping, Wilhelm, Dipl.-Ing.

(56) Entgegenhaltungen:
- DE-A- 3 705 492
- PATENT ABSTRACTS OF JAPAN vol. 014, no. 111 (P-1014), 28.Februar 1990 & JP 01 309115 A (MATSUSHITA ELECTRIC IND CO LTD), 13.Dezember 1989,
- PATENT ABSTRACTS OF JAPAN vol. 018, no. 070 (P-1687), 4.Februar 1994 & JP 05 282097 A (NEC HOME ELECTRON LTD), 29.Oktober 1993,
- PATENT ABSTRACTS OF JAPAN vol. 095, no. 008, 29.September 1995 & JP 07 121296 A (FUJITSU LTD), 12.Mai 1995,

## Beschreibung

Die Erfindung betrifft eine Computer-Maus nach den Merkmalen des Oberbegriffs des Anspruchs 1.

Die DE 3705 492 A1, gegen die die Ansprüche abgegrenzt sind, offenbart eine zweiteilige Maus mit verstellbaren Tastenpositionen. Der obere Teil mit den Tastern rotiert auf dem Grundteil. Ähnliche Eingabegeräte sind auch aus JP-A-07 121296 und JP-A-05 282097 bekannt.

Computer-Mäuse sind aus ergonomischen Gründen vielfach so gestaltet, daß sie gut in der Handinnenfläche liegen und deshalb im allgemeinen gut geführt werden können. Dabei wird jedoch nicht berücksichtigt, daß Form und Größe der Hände, sowie ihre jeweils eingenommene Griffstellung zu den Auslöse- bzw. Klicktasten individuell unterschiedlich sind, und zwar abhängig vom Alter, der Größe, dem Geschlecht und der Greifgewohnheit - Rechts-/Linkshänder- des jeweiligen Benutzers.

Der vorliegenden Erfindung liegt deshalb die Aufgabe zugrunde, eine Computer-Maus ergonomisch so zu gestalten, daß sie der individuellen Greifgewohnheit einzelner Benutzer besser gerecht wird.

Die Lösung dieser Aufgabe ergibt sich erfindungsgemäß durch die Merkmale des Anspruchs 1. Durch die Verstellmöglichkeit des die Auslösetasten enthaltenden Haubenaufsatzes gegenüber dem Grundkörper kann die Hand des Benutzers in der jeweils genehmen Lage zu den Auslösetasten aufliegen.

Vorteilhafte Weiterbildungen der Erfindung sind in Unteransprüchen angegeben. Besonders vorteilhaft erweist sich eine kalottenförmige/ähnliche Form für den Grundkörper, weil sich dabei die Hand sowohl im Daumenbereich, als auch im Handkantenbereich, d.h. im Bereich des kleinen Fingers, ergonomisch günstig an der Rundung des Grundkörpers abstützen kann. Aufgrund ihres, bezogen auf eine Mittelstellung, zu beiden Seiten verschiebbaren Haubenaufsatzes ist die erfindungsgemäß ausgebildete Computer-Maus gleichermaßen für Rechtshänder als auch für Linkshänder geeignet.

Im folgenden wird ein Ausführungsbeispiel der Erfindung anhand der Zeichnung näher erläutert. Dabei zeigen
- Figuren 1, 2: eine erfindungsgemäß gestaltete Computer-Maus in Drauf- und Seitensicht,
- Figuren 3, 4: die Computer-Maus nach Figur 1, 2 in Vorder- und Rückansicht und
- Figuren 5, 6, 7: die Vorderansicht der Computer-Maus in drei verschiedenen Bedienstellungen.
- Figur 8: eine Computer-Maus in perspektivischer Ansicht von unten, bei entfernter Bodenfläche.

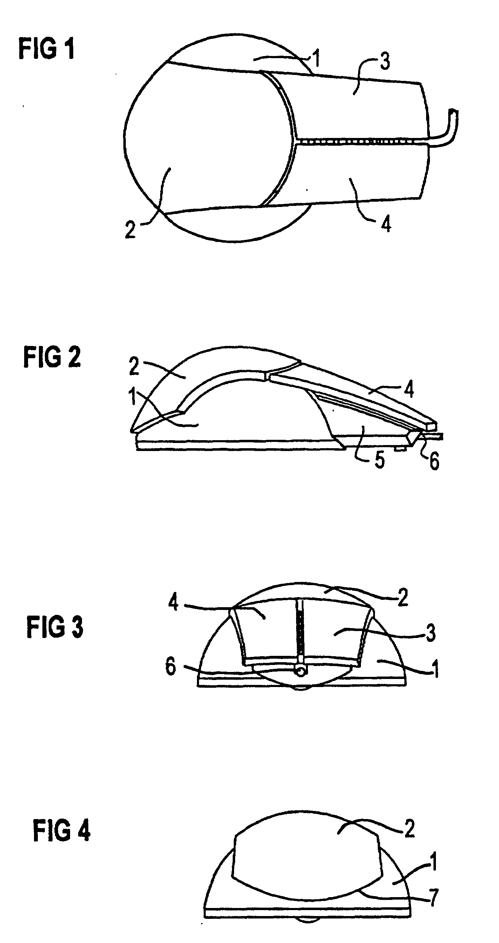

Die Figuren 1 und 2 zeigen den prinzipiellen Aufbau einer Computer-Maus, die im wesentlichen aus zwei mechanisch ineinandergreifenden Teilen besteht. Der eine Teil bildet den Grundkörper 1, an dessen Bodenfläche eine lochartige Öffnung für die Rollkugel (nicht sichtbar) vorgesehen ist, während der andere Teil aus einem streifenförmigen, der Wölbung des Grundkörpers folgenden Haubenaufsatz 2 besteht. Der Grundkörper hat eine kalottenförmige/ähnliche Gestalt mit einer entsprechend kugeligen Deckfläche. Der streifenförmige Haubenaufsatz 2 folgt zunächst der kugeligen Form des Grundkörpers, geht aber an einem Ende in zwei Auslöse- bzw. Klicktasten 3, 4 über, die auf einem schnabelartig über den Grundkörper 1 hinausreichenden, die beiden Auslöse- bzw. Klicktasten tragenden Tastenhalter 5 aufliegen. Die tangential zur Deckfläche des Grundkörpers verlaufenden Auslöse- bzw. Klicktasten 3, 4 sind schräg nach vorne abfallend angeordnet und bilden zusammen mit dem Tastenkörper 5 eine keilförmige Spitze.

Wie die Figur 3 zeigt, ist am vorderen Ende des Tastenhalters 5 im Bereich der Symmetrielinie zwischen den beiden Auslöse- bzw. Klicktasten 3, 4 ein Anschluß für das Mauskabel 6 der Computer-Maus vorgesehen (siehe auch Figur 2). Die Figur 4 zeigt die Rückansicht der Computer-Maus und das den Auslöse- bzw. Klicktasten 3, 4 gegenüberliegende Ende 7 des Haubenaufsatzes 2, das bogenförmig abgerundet ist.

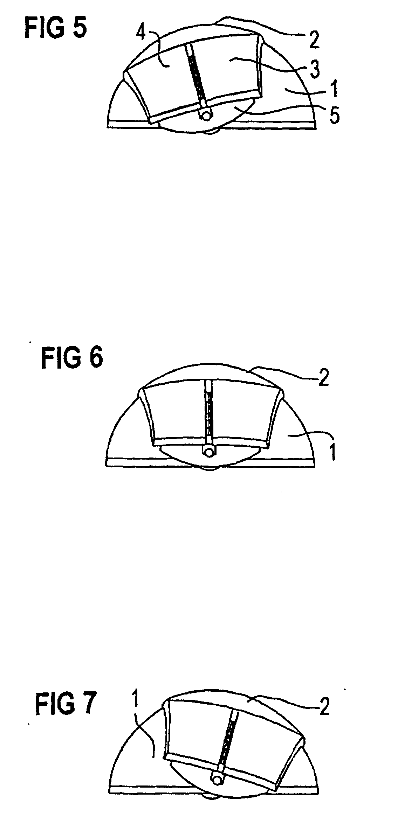

Wie die Figuren 5, 6 und 7 zeigen, sind Grundkörper 1 und Haubenaufsatz 2 der Computer-Maus gegeneinander verschiebbar, so daß de Haubenaufsatz einschließlich der Auslöse- bzw. Klicktasten 3, 4 und des Tastenhalters 5 stufenlos von einer links abfallenden Stellung (Figur 5) über eine Mittelstellung (Figur 6) in eine rechts abfallende Stellung ( Fig. 7) gebracht werden kann. Damit ist die Computer-Maus gleichermaßen für Rechtshänder als auch für Linkshänder geeignet.

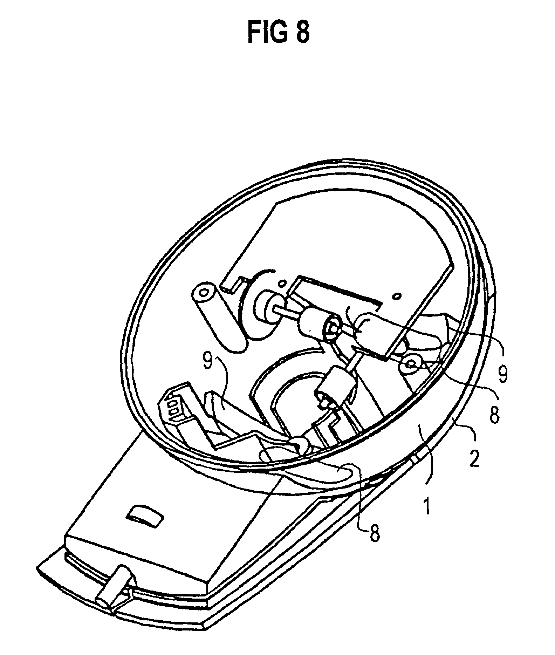

Der Verschiebemechanismus des Haubenaufsatzes 2 ist, soweit darstellbar, aus Figur 8 ersichtlich. Die, bezogen auf die Mittelstellung, beidseitige Verstellmöglichkeit wird dadurch erreicht, daß der Haubenaufsatz 2 mittels eines stiftförmigen Führungselements in einer schlitzartigen Aussparung 8 in der Deckfläche des Grundkörpers 1 geführt ist. Zur sicheren Befestigung des Haubenaufsatzes 2 am Grundkörper 1 ist am stiftförmigen Führungselement ein die Deckfläche des Grundkörpers an beiden Enden der schlitzartigen Aussparung 8 hintergreifender Gleitbügel 9 befestigt, der zu beiden Seiten der schlitzartigen Aussparung 8 in einer Nut geführt ist.

## Patentansprüche

1. Computer-Maus zur Eingabe von Positions- und Auslöse- Informationen mit einem Positionssensor in Form einer aus einer Öffnung in der Bodenfläche hervortretenden Rollkugel zur Steuerung des Mauszeigers am Bildschirm des Computers und wenigstens zwei Auslöse- bzw. Klicktasten, wobei die Maus zwei mechanisch ineinandergreifende Teile aufweist,
**dadurch gekennzeichnet, daß**
der eine, die Rollkugel enthaltende Teil als Grundkörper (1) eine gewölbte Deckfläche aufweist, und der andere Teil aus einem streifenförmigen, der Deckfläche des Grundkörpers (1) formschlüssig angepaßten Haubenaufsatz (2) besteht, der an einem Ende in einen schnabelartig über den Grundkörper (1) hinausreichenden, die beiden Auslöse- bzw. Klicktasten (3,4) tragenden Tastenhalter (5) übergeht, und daß der Haubenaufsatz (2) einschließlich des Tastenhalters (5) und der daran befestigten Auslöse- bzw. Klicktasten (3,4) gegenüber dem Grundkörper (1) verschiebbar gelagert sind.

2. Computer-Maus nach Anspruch 1,
**dadurch gekennzeichnet,**
**daß** der Grundkörper (1) kalottenförmig ausgebildet ist.

3. Computer-Maus nach einem der vorhergehenden Ansprüche,
**dadurch gekennzeichnet,**
**daß** der Haubenaufsatz (2) quer zu der zwischen den beiden Auslöse- bzw. Klicktasten (3,4) verlaufenden Symmetrielinie, ausgehend von einer Mittelstellung, zu beiden Seiten gegenüber dem Grundkörper (1), jeweils dessen Deckflächenwölbung folgend, verschiebbar gelagert ist.

4. Computer-Maus nach einem der vorhergehenden Ansprüche,
**dadurch gekennzeichnet,**
**daß** der Haubenaufsatz (2) an der dem Grundkörper (1) zugewandten Seite mittels wenigstens eines stiftartigen Führungselements in einer schlitzartigen Aussparung (8) in der Deckfläche des Grundkörpers (1) geführt ist.

5. Computer-Maus nach Anspruch 4,
**dadurch gekennzeichnet,**
**daß** an dem stiftförmigen Führungselement ein die Deckfläche des Grundkörpers an beiden Enden der schlitzartigen Aussparung (8) hintergreifender Gleitbügel (9) befestigt ist.

6. Computer-Maus nach Anspruch 5,
**dadurch gekennzeichnet,**
**daß** der Gleitbügel (9) in einer zu beiden Seiten der schlitzartigen Aussparung (8) vorgesehenen Nut geführt ist.

## Claims

1. Computer mouse for entering positional and triggering information, having a position sensor in the form of a rolling ball which projects from an opening in the base surface and is intended for controlling the mouse pointer on the screen of the computer, and having at least two triggering or clicking buttons, it being the case that the mouse has two mechanically interengaging parts, **characterized in that** one, rolling-ball-containing part, as the basic body (1), has a curved top surface, and the other part comprises a strip-like cap attachment (2) which is adapted with a form fit to the top surface of the basic body (1) and, at one end, merges into a button holder (5) which extends beyond the basic body (1) in a beak-like manner and bears the two triggering or clicking buttons (3, 4), and **in that** the cap attachment (2) including the button holder (5) and the triggering or clicking buttons (3, 4) fastened thereon are mounted such that they can be displaced in relation to the basic body (1).

2. Computer mouse according to Claim 1, **characterized in that** the basic body (1) is of dome-like design.

3. Computer mouse according to either of the preceding claims, **characterized in that** the cap attachment (2) is mounted such that, starting from a centre position, it can be displaced, transversely to the line of symmetry running between the two triggering or clicking buttons (3, 4), to both sides in relation to the basic body (1), in each case following the top-surface curvature of the latter.

4. Computer mouse according to one of the preceding claims, **characterized in that**, on the side directed towards the basic body (1), the cap attachment (2) is guided in a slot-like cutout (8) in the top surface of the basic body (1) by means of at least one pin-like guide element.

5. Computer mouse according to Claim 4, **characterized in that** fastened on the pin-like guide element is a sliding bracket (9) which engages behind the top surface of the basic body at both ends of the slot-like cutout (8).

6. Computer mouse according to Claim 5, **characterized in that** the sliding bracket (9) is guided in a groove provided on both sides of the slot-like cutout (8).

## Revendications

1. Souris d'ordinateur destinée à entrer des informations de position et de déclenchement, comprenant un capteur de position sous la forme d'une bille de roulement faisant saillie d'une ouverture de la face de fond et destinée à commander le pointeur de souris sur l'écran de l'ordinateur et au moins deux touches de déclenchement ou de clic, la souris comportant deux parties s'emmanchant mécaniquement l'une dans l'autre, **caractérisée en ce que** l'une des parties comportant la bille de roulement a en tant que pièce de base (1) une surface de couverture courbée et l'autre partie est constituée d'une coiffe (2) en forme de bande adaptée à complémentarité de forme à la surface de couverture de la pièce (1) de base et se transformant à une extrémité en un support de touche (5) allant à la manière d'un bec au-dessus de la pièce (1) de base et portant les deux touches (3, 4) de déclenchement ou de clic et **en ce que** la coiffe (2), y compris le support (5) de touche et les touches (3, 4) de déclenchement ou de clic qui y sont fixées, est montée coulissante par rapport à la pièce (1 ) de base.

2. Souris d'ordinateur suivant la revendication 1, **caractérisée en ce que** la pièce (1) de base est en forme de calotte.

3. Souris d'ordinateur suivant l'une des revendications précédentes, **caractérisée en ce que** la coiffe (2) est montée coulissante transversalement à la droite de symétrie s'étendant entre les deux touches (3, 4) de déclenchement ou de clic en partant d'une position médiane vers les deux côtés par rapport à la pièce (1) de base en suivant respectivement sa courbure de surface de couverture.

4. Souris d'ordinateur suivant l'une des revendications précédentes, **caractérisée en ce que** la coiffe (2) est guidée du côté tourné vers la pièce (1) de base au moyen d'au moins un élément de guidage du type à broche dans un évidement (8) en forme de fente ménagé dans la surface de couverture de la pièce (1) de base.

5. Souris d'ordinateur suivant la revendication 4, **caractérisée en ce qu'**il est fixé sur l'élément de guidage en forme de broche un étrier (9) glissant accrochant la surface de couverture de la pièce de base aux deux extrémités de l'évidement (8) en forme de fente.

6. Souris d'ordinateur suivant la revendication 5, **caractérisée en ce que** l'étrier (9) glissant est guidé dans une gorge prévue de part et d'autre de l'évidement (8) en forme de fente.
